## Europäisches Patentamt

## European Patent Office

## Office européen des brevets

(11) Publication number: **0 172 493**
**B1**

# (12) EUROPEAN PATENT SPECIFICATION

(45) Date of publication of patent specification: **14.11.90**

(21) Application number: **85109933.3**

(22) Date of filing: **12.03.81**

(80) Publication number of the earlier application in accordance with Art. 76 EPC: **0 036 185**

(51) Int. Cl.⁵: **G 06 F 9/26,** G 06 F 15/00, G 06 F 13/38

(54) **Information processing system.**

(30) Priority: **19.03.80 JP 35499/80**
**19.03.80 JP 35501/80**
**19.03.80 JP 35502/80**

(43) Date of publication of application:
**26.02.86 Bulletin 86/09**

(45) Publication of the grant of the patent:
**14.11.90 Bulletin 90/46**

(84) Designated Contracting States:
**DE FR GB**

(56) References cited:
FR-A-2 334 150    US-A-4 250 547
GB-A-1 330 515

IBM TECHNICAL DISCLOSURE BULLETIN, vol. 20, no. 2, July 1977, page 621, New York, US; M. KERRIGAN et al.: "Sequence-distributed ROS control"

IBM TECHNICAL DISCLOSURE BULLETIN, vol. 20, no. 9, February 1978, pages 3610,3611, New York, US; C.D. HOLTZ et al.: "Control store exception array"

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Kinoshita, Tsuneo**
**2-21-18, Fujimoto**
**Kokubunji-shi Tokyo (JP)**
Inventor: **Sato, Fumitaka**
**4-18-3, Imadera**
**Oume-shi Tokyo (JP)**
Inventor: **Yamazaki, Isamu**
**1-6-1, Haginuma**
**Takatsu-ku Kawasaki-shi (JP)**

(74) Representative: **Henkel, Feiler, Hänzel & Partner**
**Möhlstrasse 37**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to an information processing system incorporating a 1-chip arithmetic control unit of a very large scale integrated semiconductor element.

With the recent developments in semiconductor techniques, the arithmetic control unit, which is the main part of an information processing unit, can now be formed with a single very large scale integrated semiconductor element (to be referred to as VLSI for brevity hereinafter). When the arithmetic control unit is formed of a VLSI, the performance of the unit may be improved, the unit may be made more compact, and the performance to price ratio may be improved. However, there are also limits on the number of pins of the package, the power consumption, the capacity and the performance. Application techniques of VLSI of this type require further development to solve these problems. One of the problems to be solved by such techniques may be summarized as follows. Input/output devices (to be referred to as I/O for brevity hereinafter) connected to the arithmetic control unit through input/output buses mostly adopt a unit of 8 bits (1 byte) for the data transfer width. However, an I/O has recently been developed which employs a unit of 16 bits as the data transfer width for performing data transfer with the I/Os at a higher speed. Thus, the 1-chip arithmetic control unit described above must be of the construction according to which it is possible to perform smooth data transfer between these two different kinds of I/Os.

There is another problem. The 1-chip arithmetic control unit which is the subject matter of the present invention is so constructed that the control is performed by microprograms, and a memory for storing these microprograms (to be referred to as a ROM hereinafter) is externally attached to the chip due to the limits imposed by the chip. Although it is possible to freely write in the externally attached ROM, the following limits are imposed on the selection of the ROM addresses. For example, when the operation code (OP code) of the user instruction is of 8-bit construction, instructions of up to $2^8 = 256$ kinds may be prepared. In correspondence with these OP codes of 8 bits, microinstructions are stored in the 0 to 255 addresses of the externally attached ROM. The microinstructions and the user instructions are different in bit constructions and contents. Accordingly, with an instruction of a complex function such as a floating instruction, it becomes impossible to translate one user instruction with only one microinstruction. In such a case, it becomes necessary to store the microinstruction from the second word in a certain address region of the ROM so that this address may be automatically selected. Further, it is not necessary to use all of the $2^8 = 256$ kinds of user instructions; only part of them are usually used. Thus, when an OP code with no corresponding user instruction is designated by mistake (e.g.,

when the program overruns), it is necessary to detect that this OP code is an illegal instruction at the side of the microinstruction. One of the technical problems for an arithmetic control unit formed on one chip is to find out how to perform these controls with satisfactory efficiency. In addition to this, it is desired not to fix the correspondence between the microprograms and the OP codes, but to vary the correspondence as required, so that the overall unit can perform with an instruction system different from the original system.

As the logic functions within the chip increase, the kinds of the connection signals with the outside increase. However, the external connection pins which may be formed on the package of the 1-chip arithmetic control unit are limited. Another problem with the arithmetic control unit is, therefore, how to use this limited number of external connection pins to obtain more functions within the chip.

Prior art document FR-A-2 334 150 describes an information processing system comprising an arithmetic control unit fabricated on one chip which includes means for receiving an OP-code of a user instruction. The system further comprises an instruction system including a control memory for storing a plurality of micro-instructions, said first control memory being externally coupled to said arithmetic control unit. A fixed program memory is deposited on the chip of said arithmetic control unit and stores a calculator instruction.

It is an object of the present invention to provide an information processing system incorporating a 1-chip arithmetic control unit to which a control memory is externally attached, wherein input of microinstructions from said control memory and reception of the main memory information or input/output information from the external main memory and I/O devices are all performed through a single common bus, thereby greatly reducing the number of external connection pins of said arithmetic control unit.

Another object of the present invention is to provide an information processing system incorporating a 1-chip arithmetic control unit of a VLSI wherein the arithmetic control unit is capable of performing the transfer of input and output information with a plurality of I/Os of different data transfer widths so that the switching control of different data transfer widths, and the input/output control may be effectively performed with the limited number of external connection pins of the arithmetic control unit.

It is another object of the present invention is to provide a 1-chip arithmetic control unit of a VLSI wherein decoding of the user instruction and the fetching of the microinstruction are performed at the same time to improve the throughput, and any desired instruction system other than the original instruction system of the unit may be adopted as required while still employing the logic elements within the chip.

It is still another object of the present invention to provide an information processing unit having a 1-chip arithmetic control unit of VLSI for time-divisionally performing exchange with the outside of a plurality of kinds of data with different phases through a main bus wherein a plurality of kinds of status signals generated outside upon exchange of respective data may be taken in the arithmetic control unit with an extremely small number of external connection pins.

In order to attain the above-mentioned objects there is provided an information processing system as stated in claim 1.

The present invention provides an arithmetic control unit which is formed on a single chip with a very large scale integrated semiconductor element and which has an externally attached control memory wherein input of microinstructions from said control memory, output of the memory address and input/output of the memory data between the external main memory and the I/O devices, and data input/output on the input/output bus are performed through a single common bus, thereby reducing the number of external connection pins of said arithmetic control unit.

The present invention provides an information processing unit incorporating a 1-chip arithmetic control unit of a VLSI wherein the arithmetic control unit is capable of constantly smoothly performing the transfer of input and output data between a plurality of I/Os with different data widths so that the switching control of the data transfer width and the input/output control may be efficiently performed with a limited number of external connection pins of the arithmetic control unit.

The present invention further provides a 1-chip arithmetic control unit of a VLSI wherein decoding of the user instruction and the fetching of the microinstruction are performed at the same time to improve the throughput, and any desired instruction system other than the original instruction system of the unit may be adopted as required while still employing the logic elements within the chip.

The present invention further provides an information processing unit having a 1-chip arithmetic control unit of VLSI for time-divisionally performing exchange with the outside of a plurality of kinds of data with different phases through a main bus wherein a plurality of kinds of status signals generated outside upon exchange of respective data may be taken in the arithmetic control unit with an extremely small number of external connection pins so that more logic functions may be incorporated within the chip while efficiently utilizing the limited number of external connection pins.

This invention can be more fully understood from the following detailed description when taken in conjunction with the accompanying drawings, in which:

Fig. 1 is a block diagram showing the basic construction of the 1-chip arithmetic control unit which applies the present invention;

Fig. 2 is a detailed block diagram of the arithmetic control unit shown in Fig. 1;

Fig. 3 is a view showing the connections between the arithmetic control unit shown in Fig. 2 and the I/Os;

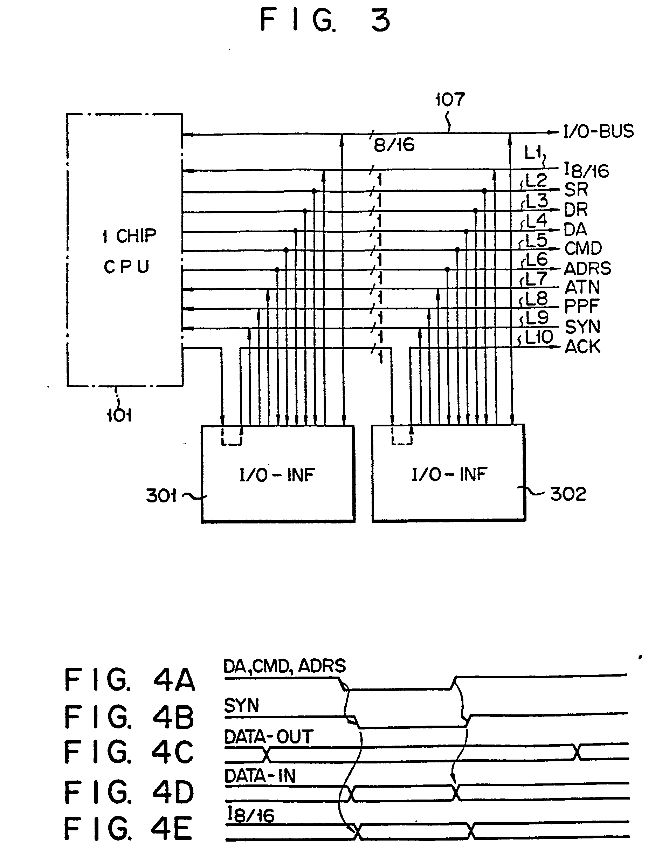

Figs. 4A through 4E are timing charts for input/output control signals, wherein Fig. 4A shows the output timing chart of a DA (Data Available) signal, a CMD (Command) signal, and an ADRS (Address) signal; Fig. 4B shows the input timing chart of a SYN (Synchronous) signal indicating a response signal from an external unit; Fig. 4C shows the output timing chart of a DATA-OUT signal for outputting data from the C-BUS to the I/O-BUS; Fig. 4D shows the input timing chart of a DATA-IN signal for outputting data from the I/O-BUS to the C-BUS; and Fig. 4E shows the input timing chart of a bus width setting signal I 8/16 of the data transfer from the I/O;

Fig. 5 shows the relation of the B-ROM disposed inside the 1-chip CPU, the C-ROM disposed externally, and the TEST signal;

Fig. 6 is a block diagram illustrating another embodiment of the present invention; and

Figs. 7A through 7F are timing charts showing the transfer timings of respective data in the C-BUS, main memory cycle and microinstruction cycle in the embodiment shown in Fig. 6, wherein Fig. 7A shows the basic clock signal; Fig. 7B shows the transfer cycle (TA) of the memory address MA; Fig. 7C shows the transfer cycle (Tμ) of the microinstruction μI; Fig. 7D shows the transfer cycle (TD) of the memory data MD; Fig. 7E shows main memory cycle and Fig. 7F shows microinstruction cycle.

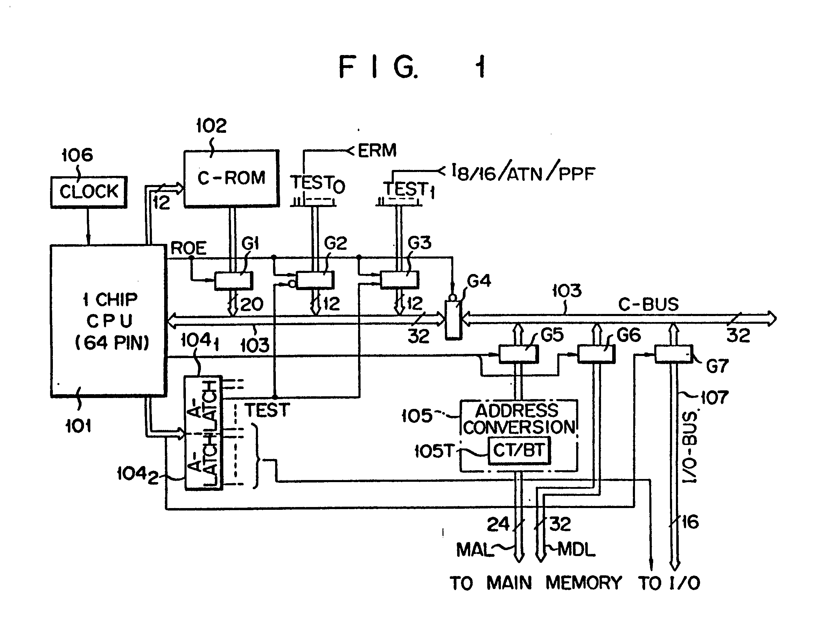

The present invention will now be described by way of its examples, referring to the accompanying drawings. Fig. 1 is a block diagram illustrating the basic construction of an information processing unit incorporating a 1-chip arithmetic control unit which is the subject matter of the present invention. Referring to the figure, reference numeral 101 denotes a 1-chip arithmetic control unit (to be referred to as 1-chip CPU hereinafter) formed on one chip by a very large-scale integrated semiconductor element (VLSI). The number of external connection pins formed for one package is 64. Reference numeral 102 denotes an externally attached control memory (to be referred to as a C-ROM) for storing the microprograms consisting of a plurality of microinstructions for controlling this 1-chip CPU 101. Reference numeral 103 denotes a common bus (to be referred to as a C-BUS) as a common data transmission line between the 1-chip CPU 101 and the external unit. This common bus 103 is constructed with the 32-bit width, and through it pass time-divisionally the output data (microinstructions) of the C-ROM 102, the memory address, the memory data, the I/O (input/output) data, and so on. Reference numerals $104_1$ and $104_2$ denote addressable latch circuits externally attached to the 1-chip CPU 101; they have the function of decoding. These addressable latch circuits $104_1$, $104_2$ output a plurality of kinds of external control signals based on the control signal output from the 1-chip CPU 101. Among these, the addressable latch circuit $104_2$ outputs 8 kinds of control signals for the I/Os which will be described in more detail hereinafter. Reference numeral 105 denotes an address conversion mechanism for enlarging the address space of the main ROM and for obtaining the physical address of the main ROM, referring to a conversion table 105T based on the logic address, the segment information and so on which are supplied from the 1-chip CPU 101 through the C-BUS 103. This address conversion mechanism 105 takes different function constructions according to the two kinds of external setting signals (BTMD, CTMD) included in the external signal group (TEST 0) for designating the address conversion system. One of them is the address conversion mechanism by base modification and the other is that by page modification. The conversion table 105T, which is the main part of the address conversion mechanism 105, is of different use construction (dividing method of the registers) for the case of the base modification and for the case of the page modification. The table used for the base modification will be referred to as a BT (Base address Table) and the table used for the page modification will be referred to as a CT (Conversion Table). Reference numeral 106 denotes a clock pulse generator for generating basic clock pulses of the 1-chip CPU 101. Reference numeral 107 denotes an input/output bus (to be referred as I/O-BUS) for transferring various kinds of data between the 1-chip CPU 101 and the input/output devices (to be referred to as I/Os hereinafter). The I/O BUS has a 16-bit width and may be used with an 8-bit width or with a 16-bit width depending upon the data transfer width of the I/O for performing data transfer with the 1-chip CPU 101. G1 to G7 are gate circuits for controlling the transfer on the C-BUS 103. When the gate circuit G1 is opened by the control signal (ROE) from the 1-chip CPU 101 and the microinstruction (20 bits) read out from the C-ROM 102 is taken in the 1-chip CPU 101 through the C-BUS 103, the gate circuit G4 is closed and the C-BUS 103 is separated from this gate circuit G4. In this case, one of the gate circuits G2 and G3 is selectively opened when the gate circuit G1 opens. In the initializing time or in the starting time, upon the opening of the gate circuit G2, a group of external signals (12 bits) of TEST O are simultaneously taken in the 1-chip CPU 101 through the C-BUS 103 together with the microinstructions from the C-ROM 102. In the general reading mode of the microprograms, upon opening the gate circuit G3, a group of external signals (12 bits) of TEST 1 are simultaneously taken in the 1-chip CPU 101 together with the microinstructions from the C-ROM 102. An external setting signal "ERM" of TEST 0 is also received as one of the group of external signals taken in the 1-chip CPU 101 together with the microinstructions.

The external input signals of I 8/16, ATN, and PPF are also included in the group of external signals of TEST 1. These signals will be described in more detail hereinafter. Except during the read cycle of the microprograms and except during the main ROM access by the DMA (Direct Memory Access) unit, the gate circuit G4 is controlled to be opened, and the gate circuits G5, G6 and G7 are selectively opened. Thus, data transfer among the 1-chip CPU 101, the address conversion mechanism 105, the main memory, and other I/O devices is performed through the C-BUS 103 and the various buses selectively connected to this C-BUS 103. MAL denotes a memory address line and MDL denotes a memory data line, both included in the memory bus.

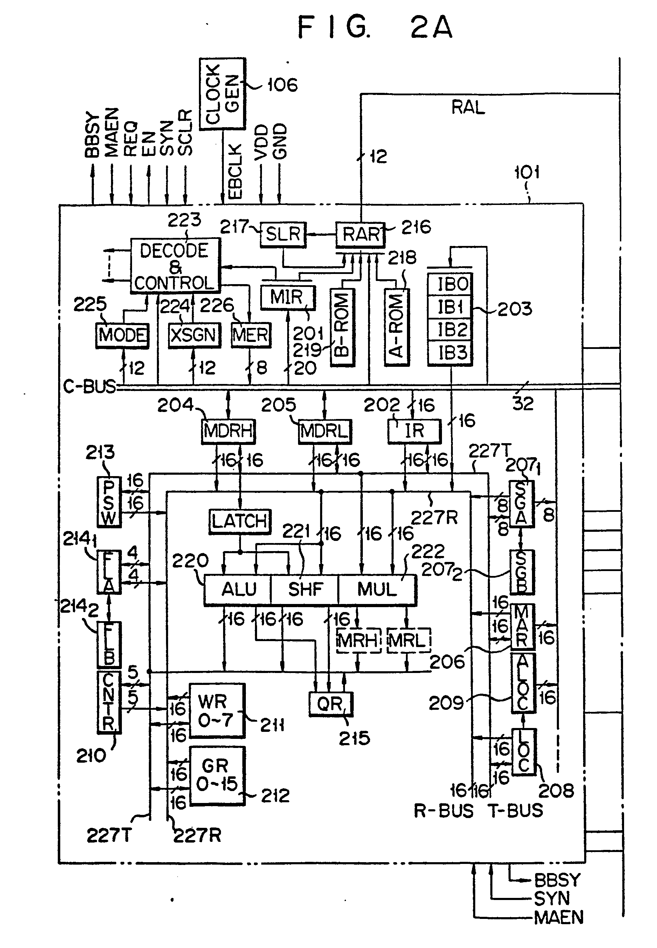

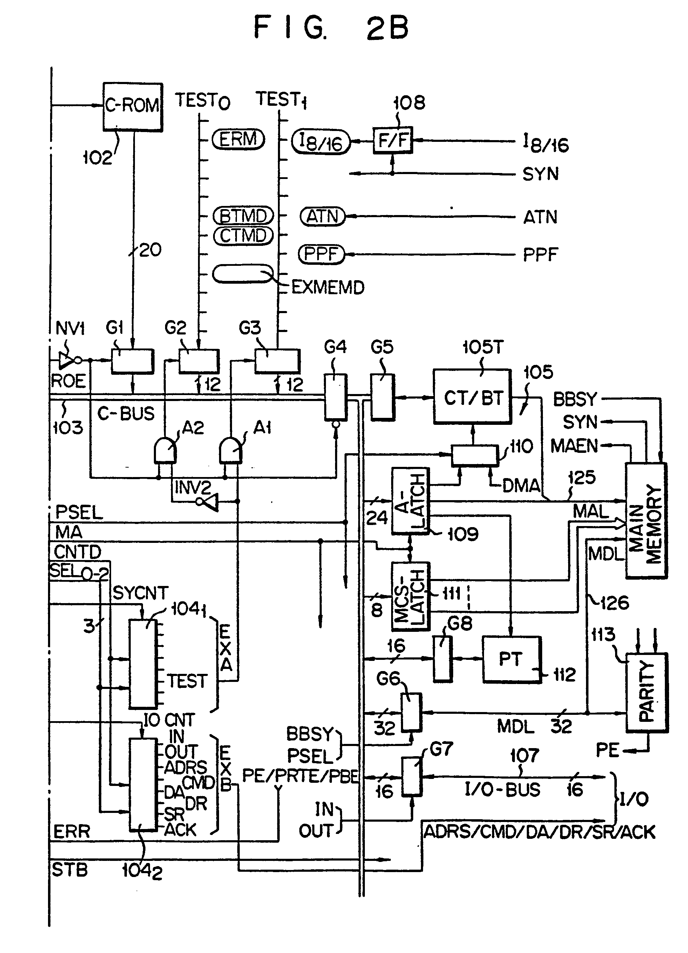

Figs. 2A and 2B are block diagrams illustrating the construction of Fig. 1 in more detail. The 1-chip CPU 101 is connected to the external circuits by a total of 64 pins including the C-BUS pin of 32-bit width. The chip includes the following logic functions:

1) MIR (Micro Instruction Register)...201: 20 bits
   This register stores the microinstructions read out from the C-ROM 102. The microinstructions read out from the C-ROM 102 are set in the register through the C-BUS 103.

2) IR (Instruction Register)...202: 16 bits
   This register holds the user instruction which is being executed. The user instruction is transferred from registers IB0 to IB3 for fetching the user instruction to this register.

3) IB0 to IB3 (Instruction Buffer)...203: 16 bits × 4
   This register performs the fetching of the user instruction. When the execution of the user instruction held in the IR 202 is completed, the net user instruction is transferred from this register to the IR 202. Although it is possible to read out the contents of the instruction buffers IB0 203 to IB3 203 to internal buses T-BUS 227T and R-BUS 227R by the microinstruction, it is impossible to write from the T-BUS 227T or from the R-BUS 227R. Writing of the user instruction in IB0 203 to IB3 203 is performed through the C-BUS 103.

4) MDRH (Memory Data Register High)...204: 16 bits
   This register holds the 16 upper significant bits among the data of 32 bits on the C-BUS 103. This register is capable of setting data from the C-BUS 103 and of supplying data to the C-BUS 103. This register is further capable of supplying data to the R-BUS 227R and the T-BUS 227T and setting data from the T-BUS 227T.

5) MDRL (Memory Data Register Low)...205: 16 bits
   This register holds the 16 lower significant bits among the data of 32 bits on the C-BUS 103. This register is capable of setting data from the C-BUS 103 and of supplying data to the C-BUS 103. This register is further capable of supplying data to the R-BUS 227R and the T-BUS 227T and of setting data from the T-BUS 227T.

6) MAR (Memory Address Register)...206: 16 bits

This register holds the address (logic address) of the main ROM, and places the address information of 24 bits to the C-BUS 103 with 8 bits of register SGA $207_1$ for holding the segment information. Since the C-BUS 103 is time-divisionally used as has been described, an address latch circuit (ALATCH) is disposed externally of the chip for latching the address information therein. This MAR 206 functions to count with units of "2" or "4".

7) SGA, SGB (Segment Register A, B)...$207_1$, $207_2$: 8 bits × 2

This register enlarges the logic address space and stores the information for designating the segment of the conversion table 105T disposed externally. The content of this register together with the content of the MAR 206 form the generating source of the physical address. SGA $207_1$ is normally used, and SGB $207_2$ is temporarily used for particular instructions.

8) LOC (Location Counter)...208: 16 bits

This counter holds the user instruction address, and counts in increments of "2" at every fetching operation of the user instruction for holding the next user instruction address.

9) ALOC (Advanced Location Counter)...209: 16 bits

This counter stores the address of the user instruction to be read out next from the main ROM. This counter is advanced by 2 or 4 bytes from the address held by the LOC 208 for controlling the fetching operation.

10) CNTR (Counter Register)...210: 8 bits This is a binary subtracting counter and is used for loop count, multiplication, division, shifting and so on of the microprograms.

11) WR0 to WR7 (Working Register)...211: 16 bits × 8

This register is used for holding a temporary result in the course of an operation in the microprogram. This register may be directly designated as the source or destination register by the microinstruction.

12) GR0 to GR15 (General Register)...212: 16 bits × 16

This is a general-purpose register and may be accessed by user instruction. It is used as an accumulator, index register and so on.

13) PSW (Program Status Word)...213: 16 bits

This is a register for storing the internal status of the CPU; it holds the various internal statuses such as the interrupting mask, the internal status of the operation result, the memory address mode, the master/slave mode and so on.

14) FLA, FLB (Flag Register A, B)...$214_1$, $214_2$ 4 bits × 2

This stores the status of the arithmetic/logic operation.

15) QR (Quotient Register)...215: 16 bits

This register is used as an additional register to ALU 220 for arithmetic/logic operations, and to SHF 221 for high speed shift.

16) RAR (ROM Address Register)...216: 12 bits

This register holds the address of the microinstruction to be read out next. The address stored in this RAR 216 is supplied to the C-ROM 102 through a ROM address line (RAL) of 12-bit width. RAR 216 has a counter function to count in unitary increments every time a microinstruction is read out.

17) SLR (Subroutine Link Register)...217: 12 bits

This register stores the return address when performing the subroutine branch with the microinstruction.

18) A-ROM (Internal ROM. A)...218: 12 bits × 2

This internal ROM stores the starting address of the microprogram after system clear, and the starting address of the microprogram after an interruption has been detected.

19) B-ROM (Internal ROM B)...219: 12 bits × 256

This internal ROM forms the correspondence table of the microinstruction with the OP codes of the user instructions, and has addresses corresponding to the addresses (0 to 255) of the C-ROM 102 capable of being designated by the OP code part (8 bit) of the IR 202. Each address of the B-ROM 219 stores information on the judgement whether the microinstruction corresponding to the OP code is terminated in one step, requires two steps or more, or is an illegal instruction. That is, all "1" when the microinstruction is terminated in one step, all "0" in the case of an illegal instruction, and the microinstruction address for the second step when the microinstruction requires two steps or more are stored in the B-ROM 219. When the microinstruction may be terminated in one microstep, this microinstruction is stored in the addresses of the C-ROM 102 corresponding to the addresses of the B-ROM 219. When the microinstruction requires two microsteps or more, the microinstruction of the first step is stored in the C-ROM 102, and the C-ROM address in which is stored the microinstruction of the second step is stored in the B-ROM 219. In the case of an illegal instruction, the starting address of the microprogram for processing an error corresponding to the illegal instruction is stored in the C-ROM 102.

20) ALU (Arithmetic and Logic Unit)...220

This combined logic circuit of 16-bit binary parallel connection performs the arithmetic and logic operations and includes a 1-bit decimal adding/subtracting circuit. The operation data from the R-BUS 227R is directly input to the ALU 220. The operation data from the T-BUS 227T is latched at the latch circuit (LATCH) and is thereafter input to the ALU 220. The operation result is output to the T-BUS 227T.

21) SHF (Shifter)...221

This hardware shifter performs left shift or right shift of 1 to 15 bits in 1 cycle. The four lower significant bits of the R-BUS 227R designate the number of shifts. The shift number designation from the R-BUS 227R is directly input to the SHR 221. The data from the T-BUS 227T is input to the SHF 221 through the latch circuit (LATCH). The shift result is output to the T-BUS 227T.

22) MUL (Multiplier)...222

This is a high-speed multiplier of $16 \times 16$ bits to which is input the data from the T-BUS 227T and R-BUS 227R. The upper significant digit of the operation results, extended in its width, is supplied to the register MRH, and the lower significant digit thereof is supplied to the register MAL. The equivalents of the MRH and MRL are assembled within the MUL. The MRH and MRL are imaginary registers and do not physically exist.

23) DECODE and CONT (Decoder and Controller)...223

This decoder and controller decodes the microinstructions stored in the MIR 201 and obtains various control signals. Predetermined signals other than the output of the MIR 201 are input to this, and are decoded or obtained as control signals.

24) XSGN (External Signal Register)...224: 12 bits

This register stores a group of external signal (12 bits) of TEST 1 which are input through the C-BUS 103 together with the microinstruction read out from the C-ROM 102. The content of the XSGN 224 is supplied to the DECODE & CONT 223.

25) MODE (Mode Register)...225: 12 bits

This register stores a group of external signals (12 bits) input through the C-BUS 103 during the initial control operation in the microprogram read cycle. The content of the MODE 225 is supplied to the DECODE & CONT 223.

26) MER (Memory Control Register)...226: 8 bits

This register stores the memory control information (8 kinds) supplied from the DECODE & CONT 223. The content of the MER 226 is supplied to the outside through the C-BUS 103 simultaneously with the contents of the MAR 206 and the SGA $207_1$ (or the SGB $207_2$).

27) T-BUS, R-BUS (Transfer Bus, Receiver Bus)...227T, 227R

The T-BUS 227T is an internal bus capable of duplex data transfer, and the R-BUS 227R is an internal bus capable of simplex data transfer. They both have 16-bit widths and are used mainly for data transfer between the registers inside the 1-chip CPU 101.

The external input/output signals of the respective pins, other than through the C-BUS 103 (32 bits) of the 1-chip CPU 101 and the ROM address line RAL (12 bits), include the following:

1) ROE (ROM Output Enable)

This is a timing signal for taking in the microinstruction read out from the C-ROM 102 through the C-BUS 103. This signal is also used as the gate control signal for separating the C-BUS 103 into the inside and the outside, and as a timing signal for taking the group of external signals (TEST 0 or TEST 1) through the C-BUS 103.

2) PSEL (Processor Select)

This signal indicates that the 1-chip CPU 101 occupies the memory bus.

3) MA (Memory Address)

This signal indicates that the signal on the C-BUS 103 is the memory address of the main ROM. By this signal, it is possible to latch the memory address in the latch circuit (LATCH).

4) SYCNT (System Control)

This is a timing signal for latching (or releasing) the control signal in the externally attached addressable latch circuit $104_1$.

5) IOCNT (I/O Control)

This is a timing signal for latching (or releasing) the control signal in the externally attached addressable latch circuit $104_2$.

6) CNTD (Control Data)

This signal is for setting/resetting the addressable latch circuits $104_1$ and $104_2$. When this signal is of level "1", the flip-flop selected by the decoded value of signals SEL0 to SEL2, from among the flip-flops 0 to 7 inside the latch circuits $104_1$ and $104_2$, is set at the timing of the corresponding CNT signal (SYCNT or IOCNT). The flip-flop is reset when this signal is at level "0".

7) SEL0, SEL1, SEL2 (Select)

These are 3-bit selection signals used as the selection signals of the flip-flop (eight for each) of the addressable latch circuits $104_1$ and $104_2$, or as the decoder input signals.

8) SYM (Synchronous)

This is a response signal from an I/O (input/output device) according to which the presence of the remote device (I/O) may be confirmed.

9) REQ (Request)

This signal is output when the DMA side requires the memory cycle.

10) EN (Enable)

This is an enable signal which is supplied to the DMA side when the REQ signal from the DMA side is received.

11) BBSY (Bus Busy)

This is one of the memory control signals, and is used as a starting/terminating signal for the main ROM.

12) MAEN (Memory Access End)

This signal is output when the main ROM has completed storing the data on the memory bus.

13) ERR (Error)

This is an error detection signal and is input when a PE (parity error), a PRTE (protect error), a PBE (conversion table non-defined error) or the like is generated.

14) SCLR (System Clear)

This is a signal for initializing a predetermined internal register or the like.

15) STB (Strobe)

This is a memory strobe signal. The memory control signals are output and controlled with this timing signal.

16) EBCLK (Basic Clock)

This is a basic clock pulse supplied from the clock pulse generator 106. The internal clock pulses are generated based on this clock pulse at the DECODE & CONT circuit 223.

17) VDD, GND

This is an operating DC power source input from an external power source device (VDD = +5 V, GND = 0 V).

The construction and operation of the structure externally attached to the 1-chip CPU 101 of the above construction will be described next. Of the addressable latch circuits $104_1$ and $104_2$ externally attached to the 1-chip CPU 101, the addressable latch circuit $104_1$ mainly outputs eight kinds of external control signals (EXA) the console, based on the respective signals of CNTD, SYCNT, and SEL0 to SEL2. The other addressable latch circuit $104_2$ mainly outputs eight kinds of external control signals (EXB) for I/Os, based on the respective signals of CNTD, IOCNT, SEL0 to SEL2 and so on. The TEST signal output from the addressable latch circuit $104_1$ is the signal for designating the group of external signals of TEST 0 or TEST 1 taken in the 1-chip CPU 101 through the C-BUS 103 simultaneously with the microinstruction (20 bits) output from the C-ROM 102. When this signal is at logic "1", the TEST 1 is selected. When this signal is at logic "0", the TEST 0 is selected. When the TEST signal is at logic "1", the output of an inverter INV1, for inverting the ROE signal having the significant level of logic "0", becomes logic "1". Accordingly, the signal of logic "1" for opening the gate circuit G3 is output from the AND gate A1. As a result, the group of external signals (12 bits) of TEST 1 are taken in the 1-chip CPU 101 through the C-BUS 103 together with the microinstruction (20 bits) read out from the C-ROM 102. When the TEST signal is at logic "0", the signal of logic "1" for opening the gate circuit G2 is output by the signal of logic "1" of an inverter INV2 for inverting this signal and the logic "1" signal of the inverter INV1. The group of external signals (12 bits) of TEST 0 are similarly taken in the 1-chip CPU 101 through the C-BUS 103. The TEST 0 signal is at logic "0" during initializing, and is at logic "1" during normal control of the microprograms. Therefore, during the initializing, the group of external signals of TEST 0 are taken in the 1-chip CPU 101 in the microprogram read cycle. During the normal microprogram control, the group of external signals of TEST 1 are taken in the 1-chip CPU 101 in the microprogram read cycle. The group of external signals of TEST 1 taken in the 1-chip CPU 101 are stored in the XSGN register 224, and the group of external signals of TEST 0 are stored in the MODE register 225. An external setting signal ERM is included in the group of external signals of TEST 0. This ERM signal is the external setting signal for selecting whether the instruction system of the unit is to be effective or ineffective. Since the B-ROM 219 as the OP code auxiliary table of the C-ROM 102 is disposed inside the 1-chip CPU 101 in advance, the setting when performed according to the rules described above may no longer be changed. However, a user may desire to use the unit with an instruction system which is different from the original instruction system of the unit, by freely changing the corresponding setting between the microprogram and the OP code. The ERM signal is used in response to this requirement. When ERM signal is at logic "0", the setting of the B-ROM 219 becomes effective. When ERM signal is at logic "1", the setting logic "1", the setting becomes ineffective. The operation will be described in more detail hereinafter.

The external input signals of I 8/16, ATN, PPF, and so on are included in the group of external signals of TEST 1 stored in the XSGN register 224. Among these signals, the I 8/16 signal is the bus width setting signal from the I/O device for performing data transfer with the 1-chip CPU 101. The logic "1" (H) of the I 8/16 signal indicates that the 16-bit width is selected for data transfer. The logic "0" (L) of the I 8/16 signal indicates that the 8-bit width is selected for data transfer. The I 8/1G signal supplied from the I/O device is temporarily latched in the externally attached flip-flop 108 in synchronization with the SYN signal described above, and is thereafter taken in for judgement in the XSGN register 224 inside the 1-chip CPU 101 at the next program read timing. The ATN signal is the interruption signal from the I/O device connected to the I/O-BUS 107. When a plurality of I/O devices are connected to the I/O-BUS 107, it is wired "OR" and is supplied to the predetermined pin (ATN) of the TEST 1. The ATN signal output from this I/O device is cleared when an ACK signal (to be described hereinafter) supplied from the 1-chip CPU 101 side is received by the I/O which requested the interruption. The PPF signal included in the TEST 1 is for signaling abnormalities in the power source from the external devices including the I/Os.

The external control signals (EXB) for the I/Os, output from the addressable latch circuit $104_2$, include the following:

1) IN (I/O Data Input)

This is a control signal for outputting data on the I/O-BUS 107 to the C-BUS 103.

2) OUT (Destination I/O)

This is a control signal for outputting data on the C-BUS 103 to the I/O-BUS 107.

3) ADRS (Address)

This is a control signal for signaling that the data on the I/O-BUS 107 is an I/O address.

4) CMD (Command)

This is a control signal for signaling that the data on the I/O-BUS 107 is an I/O command.

5) DA (Data Available)

This is a control signal for signaling that the data on the I/O-BUS 107 is the transfer data to the I/0.

6) DR (Data Request)

This is a signal for requesting that the data be placed on the I/O-BUS 107 by the I/0.

7) SR (Status Request)

This is a signal for requesting that the status be placed on the I/O-BUS 107 by the I/0.

8) ACK (Acknowledge)

This is a response signal output when an interruption request from the I/O is received.

The above-mentioned eight kinds of external control signal (EXB) for the I/Os are output by the addressable latch circuit $104_2$ with the timing of the IOCNT signal. These control signals required for controlling the I/Os are supplied to the respective I/O devices through the control line. Reference numeral 109 denotes an address latch circuit (A-LATCH) of 24-bit configuration for latching, based on the MA signal output from the 1-chip CPU 101, the logical address of 16 bits stored in the MAR register 206 and the segment information of 8 bits stored in the SGA register $207_1$ (or the SGB register $207_2$), both supplied from the 1-chip CPU 101 through the C-BUS 103. Reference numeral 110 denotes a selector for switching the indexing information of the conversion table 105T, depending on the main ROM accessing time at the CPU side and the main ROM accessing time at the DMA side. This selector selects the address information supplied from the addressable latch circuit 107 when the 1-chip CPU 101 accesses the main ROM, and selects the address information supplied from the DMA unit when the DMA unit accesses the main ROM. Reference numeral 111 denotes a memory control signal latch circuit (to be referred to as an MCS latch circuit hereinafter) for latching, at the latching timing of the address latch circuit 107 based on the MA signal output from the 1-chip CPU 101, the contents (24 bits total) of the MAR register 206 and the SGA register $207_1$ (or the SGB register $207_2$) supplied from the 1-chip CPU 101 through the C-BUS 103, simultaneously with the eight kinds of memory control information (8 bits) supplied from the MER register 226 inside the 1-chip CPU 101. Reference numeral 112 denotes a protection table (PT) constituting the memory protective mechanism G8 denotes a gate circuit for reading/writing the protection information in the protection table 112 through the C-BUS 103; and 113 denotes a parity circuit for generating a parity bit for the memory data and for parity checking.

Fig. 3 shows in simplified form the connections between the 1-chip CPU 101 and a plurality of kinds of I/O devices, wherein reference numerals 301 and 302 denote input/output interface parts (I/O-INF) of the respective I/O devices, and L1 to L10 denote input/output control lines. The respective I/O control signals such as ADRS, CMD, DA, DR, SR, ACK and so on are output from the addressable latch circuit $104_2$ externally attached to the 1-chip CPU 101 as described above.

Among them, the ACK signal (a response signal when an interruption signal is received) is supplied to the input/output interface parts 301 and 302 of the respective I/O devices by the daisy chain system. The transfer data from the respective I/O devices is transferred to the 1-chip CPU 101 through all of the I/O-BUSes 107 of 16-bit width, or through the lower significant 8 bits. The I 8/16 signal (at logic. "1" when the transfer width is 16 bits) of each -I/O devices for signaling the I/O data transfer width is wired "OR" and is output to one control line L1. Then it is latched in the flip-flop 108 in synchronism with the SYN signal, it is taken in the 1-chip CPU 101 in the next microprogram read cycle.

Figs. 4A through 4E show the input/output control timings of the respective I/O devices. Fig. 4A shows the output timing chart of the DA signal and the ADRS signal. Fig. 4B shows the input timing chart of the SYN signal as a response signal from the external devices including the I/O devices. Fig. 4C shows the output timing chart of the DATA-OUT signal for outputting the data on the C-BUS 103 to the I/O-BUS 107. Fig. 4D shows the output timing of the DATA-IN signal for outputting the data on the I/O-BUS to the C-BUS. Fig. 4E shows the input timing of the bus width setting signal I 8/16 for data transfer from the I/O devices.

The operation of the C-BUS 103 will now be described. Through the C-BUS 103 of 32-bit width pass time-divisionally, as has already been described, the output data of the C-ROM 102, that is, the microinstructions, the memory addresses of the main ROM, the memory data, the I/O data and so on.

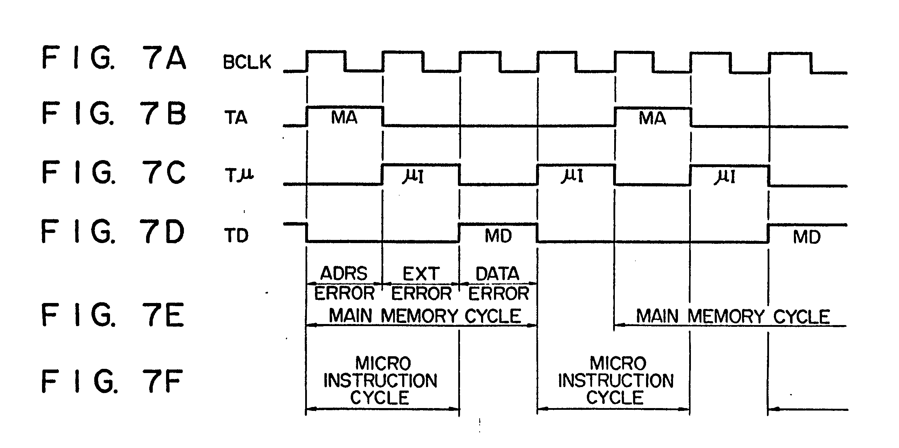

As shown Fig. 7, except during the transfer of the data, the C-BUS 103 is time-divisionally used at a predetermined time width (e.g., 200ns) in the order of the memory address, the microinstruction, the memory data, the microinstruction, and the memory address. In the read cycle of the microinstruction, the gate circuit G1 is opened by an ROE signal which is output from the 1-chip CPU 101. Then, the microinstruction (20 bits), read out from the C-ROM 102 by the designation of the microinstruction address or the OP code of the user instruction by the RAR register 216, is output on the C-BUS 103 through the gate circuit G1 and is received by the 1-chip CPU 101 through the C-BUS 103. During the transfer of the microinstructions, the group of external signals of TEST 0 or TEST 1 are taken in the 1-chip CPU 101 through the C-BUS 103 simultaneously. During the system initialization, the group of external signals of TEST 0 are selected since the TEST signal output from the addressable latch circuit is at logic "0" and gate circuit G2 is conducted. The selected signals are taken into the 1 chip CPU 101 with the microinstruction from the C-ROM 102 through the C-BUS 103. During the normal processing operation, the group of external signals of TEST 1 are selected since the TEST signal output is at logic "1" and gate circuit G3 is conducted. These groups of external signals are then taken in the 1-chip CPU 101 through the C-BUS 103 with the microinstruction from the C-ROM 102. In this case, the upper significant 12 bits of the C-BUS 103 are supplied for the transfer of the group of external signals of TEST 0 or TEST 1, and the remaining 20 bits are supplied for the transfer of the microinstruction. The microinstruction taken in the 1-chip CPU 101 through the C-BUS 103 is stored in the MIR register 201. The group of external signals of TEST 0 are stored in the MODE register 205, and the group of external signals of TEST 1 are stored in the XSGN register 204.

When the ROE signal is output, the gate circuit G4 at the intermediate position on the C-BUS 103 is closed, and the C-BUS 103 is separated into a bus at the side of the CPU and a bus at the side of the DMA. Thus, when the ROE signal is output, the C-BUS 103 is used as separated into the bus for internal processing between the 1-chip CPU 101 and the gate circuit G4, and the other bus for controlling the DMA. In the transfer of the memory address during the main memory access of the 1-chip CPU 101, on the C-BUS 103 are simultaneously output the memory address information of 24 bits total, consisting of the main memory logic address of 16 bits stored in the MAR register 206 of the 1-chip CPU 101 and the segment information of 8 bits for enlarging the logic address space stored in the SGA register $207_1$ (or SGB register $207_2$); and the memory control information of 8 bits (eight kinds) stored in the MER register 226. During the transfer of the memory address, the ROE signal is not output but the MA signal is output. Therefore, the memory address (logic address) information of 24 bits is latched in the address latch circuit (A-LATCH) 107 through the C-BUS 103 and the gate circuit G4, and the memory control information of 8 bits is latched in the MCS latch circuit 109.

Part of the memory address information stored in the address latch circuit 107 is supplied to the address conversion table 105T through the selector 108. The physical address for the main memory access, consisting of the output information by the table indexing and the address information stored in the address latch circuit 107, is supplied to the main memory through the memory address line MAL. At the side of the main memory, an instruction word, an operand data or the like is read out from the memory address which is accessed by the physical address information supplied through the memory address line MAL and the control signal from the 1-chip CPU 101 and which is designated by the 1-chip CPU 101. The data read out from the main memory is output on the C-BUS 103 through the memory data line MDL and the gate circuits G5 and G4 in the transfer cycle of the memory data following the read cycle of the microinstruction, and is received by the 1-chip CPU 101. When the received data is an instruction word, it is stored in the IB0 to IB3 203. When it is the operand data, it is stored in the MDRH register 204, the MDRL register and so on.

An external setting signal EXMEND is included in the group of external signals of TEST 0 stored in the MODE register 225. This EXMEND signal is an external setting signal for instructing whether or not to generate a time-out error when the MAEN signal, indicating the completion of the access, is not returned from the main memory within a certain period of time after the main memory is started during access of the main memory of the 1-chip CPU 101. It is, in other words, a selection signal for selecting whether or not to make the time-out function effective. When EXMEND = 0, a time-out error is generated when the MAEN signal is not returned within 10μs. When EXMEND = 1, the MAEN signal is waited for until it is returned, and the time-out does not occur.

When the EXMEND signal is logic "0" among the group of external signals of TEST 0 stored in the MODE register 225 of the 1-chip CPU 101, the 1-chip CPU 101 renders the time-out function during the main memory access effective in the microprogram control to follow. Thus, a time-out error is generated only when the MAEN signal is not returned from the main memory within a certain period of time (10μs) after the main memory is started, and thereafter the next microinstruction is processed. The main memory address control when the EXMEND signal is set at logic "0". When the 1-chip CPU 101 accesses the main memory, a memory access request is output by the BBSY signal. In response to this BBSY signal, the main memory is started and returns the SYN signal to the 1-chip CPU 101. When reading operation is taken as an example, the main memory then outputs the read out data on the memory data line MDL of the memory bus. Thereafter, the main memory outputs the MAEN signal to notice the 1-chip CPU 101 that the memory access is completed, and the data is output on the memory data line MDL. When the MAEN signal is received within the limit time (10μs), the 1-chip CPU 101 fetches the read out data through the memory data line MDL, the gate circuit G7, the C-BUS 103, the gate circuit G4, and the C-BUS 103, and stores the upper significant 16 bits in the MDRH register 204 and the lower significant 16 bits in the MDRL register 205. Thereafter, the 1-chip CPU 103 stops outputting the BBSY signal (placed under the FALSE condition) as well as outputting the memory address. The main memory also stops outputting the MAEN signal. The memory access control operation when the system is conducted has been described. In the memory access when the EXMEND signal is logic "0" and when the data and hence the MAEN signal cannot be output within a certain period of time (10μs) after the main memory has received the BBSY signal due to some accident at the side of the main memory, the 1-chip CPU 101 judges that there has been some memory abnormality since the MAEN signal is not returned within a certain period of time (10μs) after the main memory is started. Thus, the 1-chip CPU 101 generates a time-out error inside and continues to the next microstep.

When the EXMEND signal is at logic "1" among the group of external signals of TEST 0 stored in the MODE register 226 of the 1-chip CPU 101, the 1-chip CPU 101 makes the time-out function for the main memory access during the microprogram control to follow. Thus, the 1-chip CPU 101 does not generate a time-out error, even after the certain period of time (10μs) has elapsed after the main memory is started, and waits until the MAEN signal is returned from the main memory. The time-out function during the memory access may be easily cancelled by setting the EXMEND signal of TEST 0 at logic "1" in advance. Accordingly, the function construction for a particular purpose may be easily set, for when the time-out is not desired until the user has taken some measure, for when the MAEN signal need to be returned after the limit time (10μs) has elapsed (e.g., when accessing the shared memory by the multi-processor), or for when the memory elements of very slow operation speed are used. The signal (EXMEND) for designating the effective/non-effective status of the time-out function may be received by the 1-chip CPU 101 without requiring a particular pin for this purpose for the 1-chip CPU 101; thus, the limited number of external connection pins may be effectively used.

During the transfer of the I/O data, the I/O-BUS 107 of 16-bit width is connected to the lower significant 16 bits of the C-BUS 103 through the gate circuit G7, and the device addresses, commands, input/output data (I/O data) and so on are selectively transferred. The transfer of various data between the 1-chip CPU 101 and the respective I/O devices through the C-BUS 103 and the I/O-BUS 107 is started when the interruption request from the I/O device is received by the 1-chip CPU 101 and its response signal is supplied by the 1-chip CPU 101 to the I/O device. The interrupt request from the I/O device is input to the external signal group as an ATN signal. The ATN signal is taken in the 1-chip CPU 101 through the C-BUS 103 together with the microinstruction to notice it to the 1-chip CPU 101, as has been described. The response signal from the 1-chip CPU 101 responding to this interrupt request is output to the I/O device as an ACK signal from the addressable latch circuit $104_2$. The ATN signal from the I/O device, which indicates the interruption request from the I/O device, is supplied to the predetermined pin (ATN) of TEST 1 through the I/O control line L7. This ATN signal is taken in the 1-chip CPU 101 at the input timing of the microinstruction together with the other external signals of TEST 1, and is stored in the XSGN register 224. Then, the 1-chip CPU 101 recognizes the interrupt request from the I/O device. After the 1-chip CPU 101 receives the interrupt request and identifies the device involved, it outputs to the I/O device the ACK signal indicating that it has accepted the interrupt by the externally attached addressable latch circuit $104_2$. For outputting a command from the 1-chip CPU 101 to the I/O device, the CMD signal output from the addressable latch circuit $104_2$ is placed under the available (e.g., logic "1") status. For outputting a device address from the 1-chip CpU 101 to the I/O device, the ADRS signal is placed at logic "1". For requesting from the I/O device to the 1-chip CPU 101 to supply a status signal, the SR is placed at logic "1". The DR signal is placed at logic "1" for requesting the input data from the I/O device. The DA signal is placed at logic "1" for requesting the output data from the 1-chip CPU 101. The transfer of various data between the 1-chip CPU 101 and the I/O devices is performed in this manner.

When the data transmission widths vary among the various types of I/O devices connected to the I/O-BUS 107, that is, an information processing system is constructed with the various types of I/O devices in which some I/O devices have a data transfer width of 8 bits while other I/O devices have a data transfer width of 16 bits, the 1-chip CPU 101 must be able to recognize whether the transfer data on the I/0-BUS 107 is an 8-bit unit or a 16-bit unit. Especially in the case of input data, the 1-chip CPU must be signaled from the outside as to the transfer width of the data. The I/O for performing the data transfer with the 1-chip CPU 101 through the I/O-BUS 107 outputs, before the actual data transfer, an I 8/16 signal for signaling its data transfer width at a predetermined time (e.g., when the interrupt request is generated). The I/O device outputs the I 8/16 signal of logic "0" when the data transfer width of the device is 8 bits, and the I 8/16 signal of logic "1" when the data transfer width is 16 bits. This I 8/16 signal is supplied to the 1-chip CPU 101 side through the I/O control line L1. After this I 8/16 signal is temporarily latched in the flip-flop 108 in synchronization with the SyN signal, it is taken in the 1-chip CPU 101 through the C-BUS 103 together with the other external signals of TEST 1 in the next microinstruction read cycle. Thus, the 1-chip CPU 101 is capable of judging the effective bit width of the I/O data input through the I/O-BUS 107 and the C-BUS 103, and of processing the

input I/O data with the correct bit width based on the content of the I 8/16 signal.

By such a judging measure of the I/O data transfer width by the I 8/16 signal, the 1-chip CPU 101 is capable of processing the I/O data consistently with the correct data transfer width, even when the external I/O devices include those of 8-bit data transfer width and those of 16-bit data transfer width. Furthermore, since the I 8/16 signal is taken in the 1-chip CPU 101 through the C-BUS 103, as the external signals of the TEST 1, a special pin for inputting the I/O data transfer width information need not be attached to the 1-chip CPU 101. Thus, a limited number of external connection pins may be effectively used.

A description will now be made with respect to an arithmetic control unit which is capable of adopting any desired instruction system other than the original instruction system of the unit, while performing decoding of the user instruction and fetching of the microinstruction at the same time and keeping the logic elements inside the chip fixed.

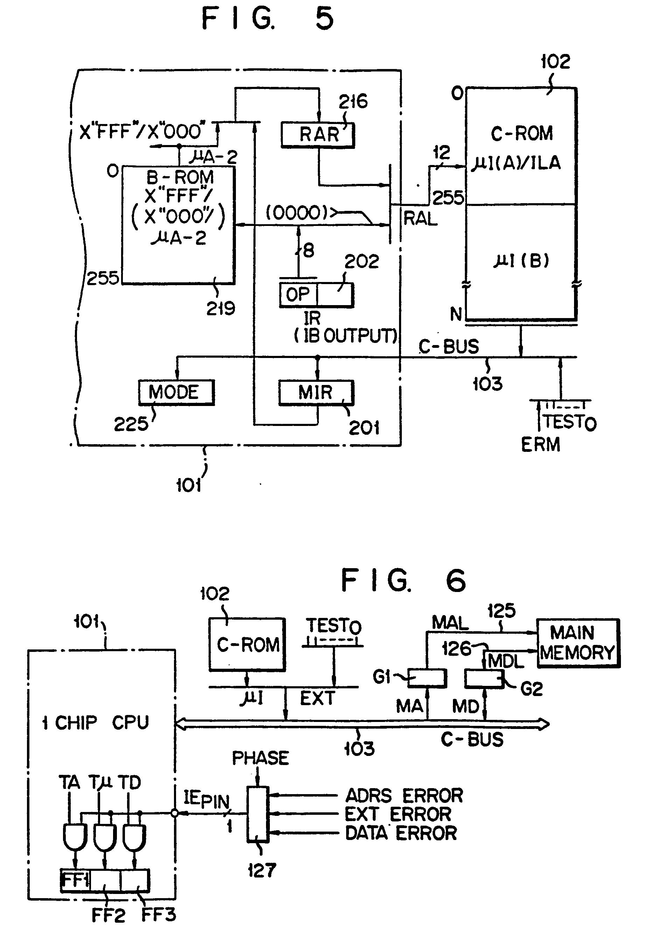

Fig. 5 is a partial view of the elements shown in Figs. 2A and 2B, wherein the same reference numerals denote the same parts. The description of these same parts will be omitted. Judgement information corresponding to the OP codes of user instructions according to the rules to be described below are each stored in the addresses 0 to 255 of the B-ROM 219. When the translation of the OP codes can be completed with one microinstruction, 12-bit information of all "1"s (X "FFF") is stored in the B-ROM 219. In the case of the OP codes of an illegal instruction, 12-bit information of all "0"s (X "000") is stored in the B-ROM 219. When the OP code requires two microsteps or more, the microaddresses $\mu A_{-2}$ of the C-ROM 102, which is the location of the second microinstruction step, is stored in the B-ROM 219. In the OP code corresponding addresses (0 to 255) of the C-ROM 102 externally attached to the 1-chip CPU 101 are stored the microinstructions $\mu I(A)$ of the first step, the starting addresses (ILA) of the illegal instruction processing, or the like. In the other addresses are stored the microinstruction $\mu I(B)$ after the second step and the like. When the ERM signal is at logic "0", the setting of the B-ROM 219 becomes effective. Then, the C-ROM 102 is address-designated and the B-ROM 219 is address-designated by the OP code of the user instruction read out from the IB0 to IB3 register 203 and stored in the IR register 202. Then, the first microinstruction is read out from the C-ROM 102, and the identifying information (All "0"s/All "1"s/$\mu A_{-2}$) corresponding to this OP code is read out from the B-ROM. 219. In the case of the illegal instruction, the branch address representing the head address of the illegal instruction processing is output from the C-ROM 102, and the identifying information of All "0"s is output from the B-ROM 219, indicating that the instruction is an illegal instruction. If the identifying information of All "0"s is output from the B-ROM 219, the information (branch address) output from the C-ROM 102 is temporarily stored in the MIR register 201 by the control operation. This information is also simultaneously stored in the RAR register 216. Thereafter, the no-operation code (All "0"s) is written in the MIR register 201. (The content of the MIR register 201 is cleared.) In the case of an OP code which requires two or more microinstruction steps, the microinstruction address of the second word is output from the B-ROM 219 and is stored in the RAR register 216. When the translation of the OP code may be completed with one microinstruction, the identifying information of All "1"s is output from the B-ROM 219. When the ERM signal is logic "1", setting of the B-ROM 219 becomes ineffective (the output is All "0"s), the output of the C-ROM 102 is input to the RAR 216 through the MIR 201, and the no-operation code (All "0"s) is written in the MIR 201. Thus, the same operation as in the case of the illegal instruction is performed.

The operation of the C-ROM 102 and B-ROM 219 will be described. During the initial setting, that is, the initialization, the group of external signals of TEST 0 are taken in the MODE register 225 of the 1-chip CPU 101 through the C-BUS 103 in the microprogram read cycle.

When the ERM signal is at logic "0" among the external signals of TEST 0 stored in the MODE register 225 of the 1-chip CpU 101, setting of the B-ROM 219 disposed inside the 1-chip CPU 101 becomes effective, so that the processing operation may be executed with the original instruction system of the unit.

The C-ROM 102 and the B-ROM 219 are address designated by the OP code of the user instruction read out from the IB0 to IB3 register 203 and stored in the IR register 202. Then, the first microinstruction is read out from the C-ROM 102, and the identifying information (All "0"s/All "1"s/$\mu A-2$) corresponding to this OP code is output from the B-ROM 219. When the user instruction to be executed is an illegal instruction, the address designation by its OP code causes the identifying information of All "0"s, indicating that the instruction is an illegal instruction, to be output from the B-ROM 219. Thus, the microinstruction read out from the C-ROM 102 (it is the branch address of the illegal instruction processing) is stored in the MIR register 201 as well as in the RAR register 216, and the content of the MIR register 201 is rewritten as the no-operation code (All "0"s). The data stored in the C-ROM 102 is read out based on the information in the branch address stored in the RAR register 216, and enters the illegal instruction processing routine. When the OP code of the user instruction to be executed requires two or more microinstruction steps, the first microinstruction read out from the C-ROM 102 by the address designation of its OP code is stored in the MIR register 201 and executed. The C-ROM 102 is accessed by address stored in the RAR register 216 and the second microinstruction read out from the B-ROM 219 by the address designation of its OP code is stored in the RAR register 216. Thereafter, a jump is made to the microprog-

ram storing address for the microinstructions after the second microinstruction.

When the ERM signal of TEST 0 stored in the MODE register 225 is at logic "1", the setting of the B-ROM 219 inside the 1-chip CPU 101 becomes ineffective, and the processing is performed under an instruction system different from the original instruction system of the unit. In this case, the setting of the B-ROM 219 becomes all ineffective (the output is always All "1"s). The output read out from the C-ROM 102 is supplied to the RAR register 216 through the MIR register 201, and the content of the MIR register 201 is thereafter rewritten as the no-operation code (All "0"s). Thus, the operation mode becomes the same as in the case of the illegal instruction. An instruction system different from the original instruction system of the unit stored in the B-ROM 219 may be established. In this manner, an instruction system which is entirely different from the original instruction system may be arbitrarily established for processing while keeping the internal logics of the 1-chip CPU 101, by simply setting the ERM signal of TEST 0 at logic "1" or "0" from the outside. Since the ERM signal is taken in the 1-chip CPU 101 through the C-BUS 103, an external connection pin for the ERM signal alone need not be incorporated, so that the limited number of external connection pins of the 1-chip CPU 101 may be effectively utilized.

A description will now be made with reference to Figs. 6 and 7 a case wherein a plurality of kinds of status signals, generated externally when time-divisionally exchanging a plurality of kinds of data with different phases between the arithmetic control unit and the external devices through the C-BUS 103, can be received by the arithmetic control unit with an extremely limited number of external connection pins. The same reference numerals denote the same parts as in Figs. 2A and 2B, and the description thereof will be omitted.

Referring to these figures, reference numeral 125 denotes a memory address line (MAL) connected to the C-BUS 103 through the gate circuit G1; and 126 denotes a memory data line (MDL) connected to the C-BUS 103 through the gate circuit G2. Reference numeral 127 denotes an external error signal reception circuit (hereinafter to be referred to as a decoder) for receiving a plurality of kinds of error signals generated outside the 1-chip CPU 101, that is, address error signals (ADRS Error), external error signals (EXT Error), memory data error signals (DATA Error) and so on, and for outputting these error signals with the phase signals (PHASE) in synchronism with the transfer cycles (TA, Tμ, TD) of these data. The output of the decoder 127 is supplied to one particular pin (to be referred to as the IE pin hereinafter) disposed at the 1-chip CPU 101, and is received by the 1-chip CPU 101. Flip-flops FF1, FF2 and FF3 are incorporated in the 1-chip CPU 101 for separately latching the various kinds of error signals input in the 1-chip CPU 101 through the IE pin in synchronism with the internal signals TA, Tμ and TD.

Figs. 7A through 7D show the transfer timings of the data in the C-BUS 103, wherein Fig. 7A shows the basic clock pulse, Fig. 7B shows the transfer cycle (TA) of the memory address MA, Fig. 7C shows the transfer cycle (Tμ) of the microinstruction μl; Fig. 7D shows the transfer cycle (TD) of the memory data MD; Fig. 7E shows main memory cycle and Fig. 7F shows microinstruction cycle.

The mode of operation will now be described. Through the C-BUS 103 time-divisionally pass, with the timings shown in Figs. 7A through 7D, the microinstruction μl, the memory address MA, the memory data MD and so on. Various data are exchanged between the 1-chip CPU 101 and the external devices in this manner. In this case, the various error signals (ADRS Error, EXT Error, DATA Error, and so on) generated outside the 1-chip CPU 101 are supplied to the associated input pin of the decoder 127. The decoder 127 receives the various input error signals at the timings of TA, Tμ, and TD in synchronism with the phase signals (PHASE), and outputs their contents. The error signal output from the decoder 127 is supplied to one IE pin of the 1-chip CPU 101 and is received by the 1-chip CPU 101. The respective output signals, that is, the error signals, received by the 1-chip CPU 101 are latched by the corresponding flip-flops FF1, FF2 and FF3 in synchronism with the internal signals TA, Tμ, and TD. Thus, the 1-chip CPU 101 can recognize the error generating status outside from the status of the flip-flops FF1, FF2 and FF3, and executes the corresponding error processing.

In accordance with the construction according to which the error signals particular to the respective phases of TA, Tμ and TD are received by the 1-chip CPU 101, and the 1-chip CPU 101 latches error signals particular to these phases in the flip-flops FF1, FF2 and FF3 in synchronism with the signals TA, Tμ and TD, so that three kinds of external error signals (ADRS Error, EXT Error, DATA Error) may be received by the 1-chip CPU 101 by a particular pin (IE pin), and the 1-chip CPU 101 may differentiate between these three different kinds of error signals. Since the error signal concerning the memory access is input through a single IE pin, the error information of the DMA memory cycle generated independently of the microprogram processing of the 1-chip CPU 101 may be freely received by the 1-chip CPU 101 independently of the microinstruction.

**Claims**

1. An information processing system comprising:

an arithmetic control unit (101) fabricated on one chip including means for receiving the OP code of a user instruction;

an instruction system comprising

(a) a first control memory (102) in which can be stored a plurality of microprograms each comprising a plurality of microinstructions for controlling said arithmetic control unit (101) in response to OP codes in user instructions, said first control memory (102) being externally coupled to said arithmetic control unit (101),

(b) a second control memory (219) disposed in said one-chip arithmetic control unit,

characterized in that:

an identifier information stored in said second control memory (219) indicates either: that the OP code in a user instruction can be executed in one step; or that the OP code in a user instruction is an illegal instruction; or that the OP code in a user instruction requires two or more steps for execution in which case the identifier information includes address information for the second step of the two or more steps, wherein said instruction system further comprises:

(c) means (202, 203) for simultaneously addressing said first and second control memories (102, 219) with the OP code in the user instruction to simultaneously read the microinstruction and the corresponding identifier information; wherein said information processing system further comprises:

means for enabling and disabling said second control memory (219) in response to a signal externally coupled to said arithmetic control unit (101), whereby said information processing system is operable with said instruction system in which identifier information in the second control memory (219) is accessed when the second control memory (219) is enabled, and with another instruction system when the second control memory (219) is disabled.

2. An information processing system according to claim 1, characterized by including a common bus (103) coupling said arithmetic control unit (101) and said first control memory (201) and means controlled by said arithmetic control unit (101) for coupling said external signal to said common bus (103), wherein said addressing means (202, 203) includes a means for reading a microinstruction onto said common bus (103) from said first control memory (201) for inputting to said arithmetic control unit (101) simultaneously with the coupling of said external signal onto said common bus (103) so that said microinstruction and said externally coupled signal are simultaneously input to said arithmetic control unit (101).

3. An information processing system according to claim 1, characterized by including means for coupling said external signal to said common bus (103) for inputting to said arithmetic control unit (101) during an initialization of said information processing system.

**Patentansprüche**

1. Informationsverarbeitungssystem mit:

einer auf einem Chip hergestellten arithmetischen Steuereinheit (101) einschließlich einer Einrichtung zum Empfangen des OP-Codes eines Benutzerbefehles;

einem Befehlssystem mit

(a) einem ersten Steuerspeicher (102), in dem eine Vielzahl von Mikroprogrammen gespeichert werden kann, deren jedes eine Vielzahl von Mikrobefehlen zum Steuern der arithmetischen Steuereinheit (101) abhängig von OP-Codes in Benutzerbefehlen umfaßt, wobei der erste Steuerspeicher (102) extern mit der arithmetischen Steuereinheit (101) gekoppelt ist,

(b) einem zweiten Steuerspeicher (219), der in der arithmetischen Ein-Chip-Steuereinheit vorgesehen ist,

dadurch gekennzeichnet, daß:

eine in dem zweiten Steuerspeicher (219) gespeicherte Identifizierinformation anzeigt entweder daß der OP-Code in einem Benutzerbefehl in einem Schritt ausgeführt werden kann, oder daß der OP-Code in einem Benutzerbefehl ein illegaler Befehl ist, oder daß der OP-Code in einem Benutzerbefehl zwei oder mehr Schritte für eine Ausführung erfordert, in welchem Fall die Identifizierinformation eine Adreßinformation für den zweiten Schritt der zwei oder mehr Schritte enthält, wobei das Befehlssystem außerdem umfaßt:

(c) eine Einrichtung (202, 203) zum gleichzeitigen Adressieren des ersten und zweiten Steuerspeichers (102, 219) mit dem OP-Code in dem Benutzerbefehl, um gleichzeitig den Mikrobefehl und die entsprechende Identifizierinformation zu lesen, wobei das Informationsverarbeitungssystem außerdem umfaßt:

eine Einrichtung zum Einschalten und Abschalten des zweiten Steuerspeichers (219) abhängig von einem extern mit der arithmetischen Steuereinheit (101) gekoppelten Signal, wodurch das Informationsverarbeitungssystem mit dem Befehlssystem betreibbar ist, in welchem ein Zugriff zu einer Identifizierinformation in dem zweiten Steuerspeicher (219) erfolgt, wenn der zweite Steuerspeicher (219) eingeschaltet ist, und mit einem anderen Befehlssystem, wenn der zweite Steuerspeicher (219) abgeschaltet ist.

2. Informationsverarbeitungssystem nach Anspruch 1, gekennzeichnet durch einen gemeinsamen Bus (103), der die arithmetische Steuereinheit (101) und den ersten Steuerspeicher (201) koppelt, und eine durch die arithmetische Steuereinheit (101) gesteuerte Einrichtung zum Koppeln des externen Signales mit dem gemeinsamen Bus (103), wobei die Adressiereinrichtung (202, 203) eine Einrichtung zum Lesen eines Mikrobefehles auf den gemeinsamen Bus (103) von dem ersten Steuerspeicher (201) zum Eingeben in die arithmetische Steuereinheit (101) gleichzeitig mit dem Koppeln des externen Signales auf den gemeinsamen Bus (103) umfaßt, so daß der Mikrobefehl und das extern gekoppelte Signal gleichzeitig in die arithmetische Steuereinheit (101) eingegeben werden.

3. Informationsverarbeitungssystem nach Anspruch 1, gekennzeichnet durch eine Einrichtung zum Koppeln des externen Signales zu dem gemeinsamen Bus (103) zum Eingeben in die arithmetische Steuereinheit (101) während einer Initialisierung des Informationsverarbeitungssystems.

## Revendications

1. Système de traitement d'information comportant:

une unité de commande arithmétique (101) fabriquée sur une pastille, comprenant un dispositif de réception du code OP d'une instruction d'utilisateur;

un système d'instructions comportant

a) une première mémoire de commande (102) dans laquelle peuvent être mémorisés plusieurs microprogrammes comprenant chacun plusieurs micro-instructions pour commander ladite unité de commande arithmétique (101) en réponse aux codes OP des instructions d'utilisateur, ladite première mémoire de commande (102) étant couplée par l'extérieur avec ladite unité de commande arithmétique (101),

b) une seconde mémoire de commande (219) disposée dans ladite unité de commande arithmétique sur une pastille,

caractérisé en ce que:

des informations d'identificateur, mémorisées dans ladite seconde mémoire de commande (219) indiquent que le code OP d'une instruction d'utilisateur peut être exécuté en une phase ou que le code OP d'une instruction d'utilisateur est une instruction illégale; ou que le code OP d'une instruction d'utilisateur nécessite deux ou plusieurs phases pour l'exécution, auquel cas les informations d'identificateur comprennent des informations d'adresse pour la seconde phase de deux ou plusieurs phases, dans lequel ledit système d'instructions comporte en outre:

c) un dispositif (202, 203) destiné à adresser simultanément ladite première et ladite seconde mémoires de commande (102, 219) avec le code OP d'une instruction d'utilisateur pour lire simultanément la microinstruction et les informations d'identicateur correspondantes, dans lequel ledit système de traitement d'information comporte en outre:

un dispositif pour autoriser ou inhiber ladite seconde mémoire de commande (219) en réponse à un signal couplé extérieurement à ladite unité de commande arithmétique (101), de manière que ledit système de traitement d'information soit opérant avec ledit système d'instructions dans lequel les informations d'identificateur dans la seconde mémoire de commande (219) sont accédées quand la seconde mémoire de commande (219) est autorisée et avec un autre système d'instructions quand la seconde mémoire de commande (219) est inhibée.

2. Système de traitement d'information selon la revendication 1, caractérisé en ce qu'il comporte en outre une ligne omnibus commune (103) couplant ladite unité de commande arithmétique (101) et ladite première mémoire de commande (201) et un dispositif commandé par ladite unité de commande arithmétique (101) pour coupler ledit signal extérieur avec ladite ligne omnibus commune (103), dans lequel ledit dispositif d'adressage (202, 203) comporte un dispositif pour lire une micro-instruction sur ladite ligne omnibus commune (103) provenant de ladite première mémoire de commande (201) pour introduire dans ladite unité de commande arithmétique (101), simultanément avec le couplage dudit signal extérieur sur ladite ligne omnibus (103) de manière que ladite micro-instruction et ledit signal couplé extérieurement soient appliqués simultanément à ladite unité de commande arithmétique (101).

3. Système de traitement d'information selon la revendication 1, caractérisé en ce qu'il comporte en outre un dispositif pour coupler ledit signal extérieur avec ladite ligne omnibus commune (103) pour appliquer à ladite unité de commande arithmétique (101) pendant une initialisation dudit système de traitement d'information.

# F I G. 1

EP 0 172 493 B1

EP 0 172 493 B1

F I G. 2A

2

# F I G. 2B

EP 0 172 493 B1

# F I G. 3

## F I G. 4A  DA, CMD, ADRS
## F I G. 4B  SYN
## F I G. 4C  DATA-OUT
## F I G. 4D  DATA-IN
## F I G. 4E  I8/16

4

EP 0 172 493 B1

F I G. 5

F I G. 6

5

F I G. 7A  BCLK

F I G. 7B  TA  MA  MA

F I G. 7C  Tμ  μI  μI  μI

F I G. 7D  TD  MD  MD

F I G. 7E  ADRS | EXT | DATA
ERROR | ERROR | ERROR
MAIN MEMORY CYCLE  MAIN MEMORY CYCLE

F I G. 7F  MICRO INSTRUCTION CYCLE  MICRO INSTRUCTION CYCLE

EP 0 172 493 B1